# EUROPEAN PATENT SPECIFICATION

(11) **EP 1 757 625 B1**
(45) Date of publication and mention of the grant of the patent: **28.10.2015**
(21) Application number: 05752485.2
(22) Date of filing: 28.04.2005
(51) Int. Cl.: C08F 2/44, C08F 36/06, C08F 36/08, C08F 236/06, C08F 236/08, C08F 236/10, C08F 297/04, C08K 9/00, C08K 9/04, C08K 9/06, C08K 3/34, C08L 9/00, C08L 9/06, C08L 53/02

(54) **A POLYMER/CLAY NANOCOMPOSITE AND PROCESS FOR THE PRODUCTION THEREOF**
POLYMER/TON-NANOVERBUNDWERKSTOFF UND HERSTELLUNGSVERFAHREN DAFÜR
NANOCOMPOSITE POLYMERE/ARGILE ET PROCEDE D'OBTENTION

(30) Priority: 28.04.2004 CN 200410037623; 28.04.2004 CN 200410037622
(43) Date of publication of application: 28.02.2007
(73) Proprietor: China Petroleum & Chemical Corporation, Beijing 100029 (CN)
(72) Inventor: LI, Yang, Rsrch. Inst. Beijing Yanshan, Fangshan District 102500 Beijing (CN); XU, Hongde Rsrch. Inst. Beijing Yanshan, Fangshan District 102500 Beijing (CN); LV, Zhanxia Rsrch. Inst. Beijing Yanshan, Fangshan District 102500 Beijing (CN); ZHANG, Xueqin Rsch. Inst. Beijing Yanshan, Fangshan District 102500 Beijing (CN); ZHANG, Zhenjun Wuhan Univ. College Chem., 430072 Wuhan, Hubei (CN); ZHANG, Lina, Wuhan Univ. College Chem. &, 430072 Wuhan, Hubei (CN); ZENG, Ji, Beijing R & D Institute of, 100039 Beijing (CN); ZHU, Jiedong., SINOCHEM TAICANG CHEMICAL INDUSTRIAL PARK, 215433 Taicang Port, Jiangsu Province, (CN); LIAO, Mingyi Electromechanics and Materials Engineering College, 116026 Dalian, Liaoning Province (CN); YU, Dingsheng Beijing Uni. Chem. Tech., 100029 Beijing (CN)
(74) Representative: Herzog, Fiesser & Partner Patentanwälte PartG mbB
(86) International application number: PCT/CN2005/000588
(87) International publication number: WO 2005/105856

(56) References cited:
- EP-A- 1 273 616
- EP-A- 1 321 489
- WO-A-02/24758
- CN-A- 1 394 905
- CN-A- 1 458 175
- US-A1- 2003 100 652
- US-B1- 6 252 020

## Description

### Technical Field of the Invention

The present application relates to polymer/clay nanocomposite materials, more particularly, to nanocomposite materials based on a copolymer of at least two monomers selected from the group consisting of butadiene, isoprene and styrene and a clay mineral, and a process for preparing them.

### Background of the Invention

Polymer nanocomposite materials are substantially different from conventional composite materials(wherein the dispersed phase is in a size of microns) in mechanical properties and functionalization ability, due to a high fineness and a nano-scaled effect of the dispersed phase. Among them, layered silicate/polymer nanocomposite materials exhibit much more pronounced or specific properties, such as high rigidity, high strength, high barrier property, high flame retardancy, high chemical resistance, due to a high shape factor of the dispersed phase(laminar layers of layered silicate crystals). For layered silicate/polymer nanocomposite materials, there are generally three preparation processes: in-situ intercalation polymerization of polymerizable monomers, prepolymer intercalation and polymer intercalation. In the prepolymer intercalation process, a sufficient amount of prepolymers must be intercalated between the layers of organoclays, just like monomers, and however, since the prepolymers are obviously more viscous than the monomers, not only the expansion ability of the organoclays by the prepolymers, but also the reactivity and reaction rate are reduced. Therefore, the difficulties of such a process lie in decreasing the viscosity of the prepolymers and increasing the compatibility or the reactivity between the prepolymers and the organoclays. In the polymer intercalation process, the polymers in the form of melt or solution are directly intercalated between the layers of organically modified silicates, which is driven by the physical or chemical interactions between the polymers and the organically modified silicates, thereby forming layered silicate/polymer nanocomposite materials. In order to improve the compatibility between the polymers and the organoclays, appropriate compatibilizers are often introduced, and the compatibilizers to be introduced are required to have a relatively strong interaction with the intercalating agents or have an enough long non-polar portion to not only provide a steric hindrance, enlarge the interlayer distance and reduce the interlayer attractions, but also improve the compatibility with the polymer matrix. However, the compatibilizers will deteriorate the properties of the resultant materials when used in a relatively large amount. In the in-situ intercalation polymerization of monomers, organoclays are directly added to the monomers so as to be swollen therein and then the monomers are in-situ polymerized in and around the interlayer spaces, with the interlayer distance being gradually enlarged as the reaction progresses and finally the organoclays being uniformly dispersed in the resultant polymers in single layers, thereby forming organoclay/polymer nanocomposite materials. In the nanocomposite materials thus obtained, there are a relatively strong interaction and a better compatibility between the organoclays and the polymers, the organoclays are uniformly dispersed in the polymer matrix, a delaminated structure can be easily formed and thus the organoclays exert a pronouncedly reinforcing effect on the polymer matrix. It thus can be seen that the in-situ intercalation polymerization of monomers is most ideal and effective for compounding polymers and organoclays.

US Patent No. 4,889,885 discloses two processes for preparing clay/rubber nanocomposite materials. One is the in-situ intercalation polymerization in which the laminar layers of the clay mineral are firstly modified with quaternary ammonium salts having a terminal vinyl group, the resultant organoclay is then dispersed in N,N-dimethylformamide solvent, isoprene and a corresponding amount of free radical initiator are added into the resultant dispersion, then isoprene is polymerized in the interlayer spaces of the clay to form an polyisoprene rubber, and finally the solvent is removed to obtain a clay/polyisoprene rubber nanocomposite material. In the other of said processes, a liquid amino-terminated nitrile rubber having a lower molecular weight is dispersed in a mixed solvent composed of water and dimethyl sulfoxide and to the resultant dispersion is added an acid to quaternize the terminal amino group, followed by mixing with an aqueous clay suspension, and finally water and the solvent are removed to form a clay/liquid nitrile rubber nanocomposite material.

In the process disclosed in International Patent Application WO 97/00910, a clay mineral is firstly dispersed in water and is very fast and uniformly stratified due to the hydration of the interlayer cations, then to the resultant dispersion are added (a) momoner(s), an initiator, an emulsifier and finally the resultant mixture is emulsion polymerized in the aqueous dispersion of laminar layers of clay crystals, thereby forming clay/rubber nanocomposite materials. Due to the restrictions on the particle diameter and the micellar size of the emulsion, the dispersibility of the clay mineral in said process is inferior, the stratification is caused only by an interfacial physical interaction and the reaction is too complicated to be easily controlled and industrialized.

Chinese Patent No. ZL98101496.8 discloses a macromolecular emulsion intercalation process, wherein a clay mineral is firstly dispersed in water in a lower proportion, then to the resultant dispersion is added a rubber latex, with the macromolecular latex particles penetrating and separating the laminar layers of the clay mineral and a smaller diameter of latex particles resulting in a better dispersing effect, to the resultant mixture is added a co-coagulating agent so as to co-precipitate the whole system and finally water is removed to obtain a rubber/clay composite material. By means of such a process, composite materials such as clay/SBR, clay/NBR, clay/XNBR, clay/NR, clay/CR are successfully prepared. In order to improve the interfacial interaction, multifunctional coupling molecules can be added to this system. Said process is based on the fact that most rubbers can be provided in a form of emulsion and thus is simple, easily controllable and involve low costs. Such a process is disadvantageous in that in the case of a high clay content, the dispersibility of the clay mineral is inferior to that in the reactive intercalation process and a larger amount of waste water is produced.

### Summary of the Invention

In view of the above situations, the present inventors made extensive investigations in the field of polymer/clay nanocomposite materials and as a result, it is found that a class of copolymer/clay nanocomposite materials based on a copolymer of at least two monomers selected from the group consisting of butadiene, isoprene and styrene and a clay mineral can be prepared by subjecting said monomers to an in-situ intercalation polymerization in the presence of an organoclay by using an organolithium as the initiator, an organic hydrocarbon solvent as the solvent and a polar additive as the microstructure modifier by means of a classical anionic solution polymerization process, instead of the free radical polymerization process and the emulsion polymerization process as mentioned above, thereby forming elastomers reinforced in a nano-scale and effectively enhancing the comprehensive properties of the polymer products. Meanwhile, compared to the free radical polymerization process and the emulsion polymerization process as mentioned above, the present invention is advantageous in that by means of the anionic solution polymerization process with an alkyllithium as the initiator, the microstructures and the molecular parameters of the copolymers based on at least two monomers selected from the group consisting of butadiene, isoprene and styrene can be easily adjusted, so as to prepare a series of copolymer/clay nanocomposite materials.

An object of the present invention is to provide a copolymer/clay nanocomposite material based on a copolymer of at least two monomers selected from the group consiting of butadiene, isoprene and styrene and a clay mineral, which is of a delaminated structure, is excellent in mechanical properties, heat resistance, barrier property, chemical resistance and is well balanced in its comprehensive properties.

Another object of the present invention is to provide a process for preparing the copolymer/clay nanocomposite material according to the present invention, wherein at least two monomers selected from the group consisting of butadiene, isoprene and styrene are subjected to in-situ intercalation polymerization in the presence of an organoclay by means of the lithium-based initiator. Due to the high fineness and the nano-scaled effect of the dispersed phase in the polymer/clay nanocomposite material according to the present invention, the mechnical properties and the functionalization ability of conventional composite materials can be improved and the resultant products have pronounced characteristics, such as high rigidity, high strength, high barrier property, high flame retardance, high chemical resistance. Compared to the copolymers prepared by the free radical polymerization process and the emulsion polymerization as mentioned above, the copolymers based on at least two monomers selected from the group consisting of butadiene, isoprene and styrene, prepared by using an organolithium as the initiator by means of the anionic solution polymerization process, have obviously different characteristics such as microstructures.

These and other objections, features and advantages of the present invention will become more apparent to those skilled in the art from the detailed description of the present application with reference to the accompanied drawings.

### Brief description of the Drawings

Figure 1 is the transmission electron micrograph of the butadiene-isoprene-styrene copolymer/clay nanocomposite material obtained in Example 2;
Figure 2 is the transmission electron micrograph of the butadiene-isoprene-styrene copolymer/clay nanocomposite material obtained in Example 1;
Figure 3 is the X-ray diffraction patterns of the butadiene-isoprene-styrene copolymer/clay nanocomposite materials obtained in Examples 1, 2 and 4;
Figure 4 is the transmission electron micrograph of the butadiene-styrene copolymer/clay nanocomposite material obtained in Example 6;
Figure 5 is the X-ray diffraction pattern of the butadiene-styrene copolymer/clay nanocomposite material obtained in Example 6;
Figure 6 is the thermogravimetric analysis curve of the butadiene-styrene copolymer/clay nanocomposite material obtained in Example 6;
Figure 7 is the transmission electron micrograph of the butadiene-isoprene copolymer/clay nanocomposite material obtained in Example 11;
Figure 8 is the thermogravimetric analysis curve of the butadiene-isoprene copolymer/clay nanocomposite material obtained in Example 11;
Figure 9 shows the X-ray diffraction patterns of the copolymer/clay nanocomposite materials obtained by in-situ intercalation polymerization according to the present invention as compared to those by solution intercalation.

### Detailed description of the Invention

The present invention provides a copolymer/clay nanocomposite material, comprising a copolymer of at least two monomers selected from the group consisting of butadiene, isoprene and styrene and a clay mineral dispersed therein, wherein said copolymer has a number-average molecular weight of from 1×10⁴ to 60×10⁴, preferably from 5×10⁴ to 40×10⁴, more preferably from 10×10⁴ to 30×10⁴; a content of 1,2-addition polymerization structure and/or 3,4-addition polymerization structure of from 5 to 100% by weight, a content of 1,4-addition polymerization structure of from 95 to 0% by weight and a content of said clay mineral of from 0.5 to 50 parts by weight per 100 parts by weight of said copolymer.

In the nanocomposite material according to the present invention, the content of said clay mineral is generally from 0.5 to 50 parts by weight per 100 parts by weight of said copolymer, preferably from 1 to 30 parts by weight per 100 parts by weight of said copolymer, more preferably from 1 to 15 parts by weight per 100 parts by weight of said copolymer. If the content of said clay mineral is less than 0.5 part by weight per 100 parts by weight of said copolymer, the reinforcing effect of said clay mineral is insufficient; and if the content of said clay mineral is higher than 50 parts by weight per 100 parts by weight of said copolymer, the resultant material is in the form of powders and thus is difficult to handle and shape.

When the nanocomposite material according to the present invention comprises a copolymer of butadiene and styrene, the content of the structural units derived from styrene is generally from 10 to 50% by weight, preferably from 15 to 35% by weight, and correspondingly, the content of the structural units derived from butadiene is generally from 50 to 90% by weight, preferably from 65 to 85% by weight.

When the nanocomposite material according to the present invention comprises a copolymer of butadiene, isoprene and styrene, the content of the structural units derived from styrene is generally from 10 to 50% by weight, preferably from 15 to 35% by weight, and correspondingly, the content of the structural units derived from both butadiene and isoprene is generally from 50 to 90% by weight, preferably from 65 to 85% by weight, with the weight ratio of the structural units derived form butadiene to those derived from isoprene being from 10: 90 to 90: 10, preferably from 30: 70 to 70: 30.

When the nanocomposite material according to the present invention comprises a copolymer of butadiene and isoprene, the content of the structural units derived from isoprene is generally from 10'to 90% by weight, preferably from 30 to 70% by weight, and correspondingly, the content of the structural units derived from butadiene is generally from 10 to 90% by weight, preferably from 30 to 70% by weight.

The nanocomposite material according to the present invention is of a delaminated structure, wherein the laminar layers of clay minerals are delaminated from each other, completely separated from each other and uniformly dispersed in the copolymer matrix in a disordered state.

The present invention also provides a process for preparing the copolymer/clay nanocomposite material according to the present invention, comprising charging a reactor with an organic hydrocarbon solvent, at least two monomers selected from the group consisting of butadiene, isoprene and styrene, optional polar additives and an organoclay mineral dispersed in a dispersing medium; stirring uniformly to form a stable monomers/organoclay dispersion; then raising the temperature of the reaction system to 30 to 80°C; initiating the polymerization reaction by adding an organolithium initiator; after the complete polymerization of all monomers, terminating the reaction and optionally adding a conventional additive; working up the resultant polymer solution by a conventional manner and then drying.

In a preferred embodiment according to the present invention, the copolymer/clay nanocomposite material according to the present invention can be prepared by a process comprising:
1. providing a dispersion of an organoclay, containing from 1 to 10g of the organoclay per 100ml of dispersing medium;
2. adding at least two monomers selected from the group consisting of butadiene, isoprene and styrene in an organic hydrocarbon solvent to a reactor, followed by the addition of the dispersion of the organoclay and optional polar additive for adjusting the microstructures of the resultant copolymer, then stirring the resultant mixture so as to render it uniform and form a stable monomers/organoclay dispersion, and after reaching an initiation temperature of 30 to 80°C, initiating the polymerization reaction by adding an organolithium initiator;
3. after the complete polymerization of all monomers, adding a terminator to terminate the polymerization and then optionally adding a conventional additive, working up the resultant polymer solution by a conventional manner and then drying.

In the process for preparing the copolymer/clay nanocomposite material according to the present invention, the order for adding the organic hydrocarbon solvent, monomers, optional polar additive and the organoclay dispersed in a dispersing medium is not important, and they can be added sequentially or simultaneously. The amount of the organoclay is such that the resultant copolymer/clay nanocomposite material comprises from 0.5 to 50 parts by weight per 100 parts by weight of said copolymer.

The organoclay used in the present invention may be any commercial intercalated clay minerals, for example from Zhejiang Fenghong Clay Chemicals Co., Ltd., which is a nano-scaled montmorillonite(fine powders). The intercalated clay minerals used in the present invention can also be obtained by intercalating the clay minerals with an intercalating agent. Said clay minerals can be selected from the group consisting of montmorillonite, hectorite, saponite, Zinc-montmorillonite, vermiculite, beidellite, smectite, silica, halloysite, talcum powder, magadiite, kenyaite, illite, layered aluminium or zirconium phosphate, or mixtures of them; preferably layered aluminosilicates containing at least 85% of montmorillonite, more preferably those containing at least 95% of montmorillonite, whose unit cell is composed of two layers of silicon-oxygen tetrahedron and a layer of aluminium-oxygen octahedron sandwiched therebetween, with the tetrahedron and the octahedron being connected to each other by a common oxygen atom. The inner surfaces of the montmorillonite are negatively charged, with the interlayer cations Na⁺, Ca²⁺, Mg²⁺ being exchangeable. Such a montmorillonite clay can be obtained by exfoliating, purification, superfine classification and organically compounding. The intercalated clay(organoclay) can be obtained by exchanging the interlayer cations with an intercalating agent(an ion exchanger), thus allowing the polymerizable monomers to intercalate between the layers, for example as described in US Patent No. 4,889,885. The montmorillonite clay used in the present invention is layered aluminosilicates preferably having a montmorillonite content of at least 85% by weight, a particle size ranging from 1×10³ to 70×10³nm and a cation exchange capacity of from 40 to 200meg/100g, more preferably having a montmorillonite content of at least 95% by weight, a particle size ranging from 20×10³ to 30×10³nm and a cation exchange capacity of from 90 to 110meg/100g. The intercalating agent which may be used is selected from the group consisting of organic ammoniums, for example secondary ammoniums, tertiary ammoniums or quaternary ammoniums, such as cetyl trimethyl ammonium chloride, stearyl trimethyl ammonium chloride, lauryl dimethyl benzyl ammonium chloride, bisstearyl dimethyl ammonium chloride, lauryl trimethyl ammonium chloride, cetyl trimethyl ammonium bormide, stearyl trimethyl ammonium bromide, lauryl dimethyl benzyl ammonium bromide, bisstearyl dimethyl ammonium bromide, lauryl trimethyl ammonium bromide, which can be used alone or in mixture.

The organic hydrocarbon solvent used in the present invention is selected from the group consisting of aromatic hydrocarbons, aliphatic hydrocarbons or mixtures thereof, generally selected from benzene, toluene, ethylbenzene, xylene, pentane, hexane, heptane, octane, cyclohexane, mixed aromatics(such as mixed xylenes), mixed aliphatic hydrocarbons(such as raffinate oil), preferably from toluene, xylene, hexane, cyclohexane, raffinate oil. The solvent is used in such an amount that the monomer concentration is from 10 to 20% by weight.

The dispersing medium used in the present invention is selected from the group consisting of benzene, toluene, ethylbenzene, xylene, mixed aromatics, diethyl ether, triethylamine, hexamethylphosphoric triamide or mixtures thereof, preferably toluene, xylene or the mixture thereof.

The polar additive which can be used according to the present invention is selected from oxygen-, nitrogen-, sulfur- or phosphorus-containing polar compounds or mixtures thereof. Specific examples are as follows: (1) oxygen-containing compounds, generally selected from the group consisting of diethyl ether, tetrahydrofuran, compounds represented by the formulae R₁OCH₂CH₂OR₂(where R₁ and R₂ may be same or different, preferably different, and independently of each other represents an alkyl group having from 1 to 6 carbon atoms, such as ethylene glycol dimethyl ether, ethylene glycol diethyl ether) and R₁OCH₂CH₂OCH₂CH₂OR₂(where R₁ and R₂ may be same or different, preferably different, and independently of each other represents an alkyl group having from 1 to 6 carbon atoms, such as diethylene glycol dimethyl ether, diethylene glycol dibutyl ether), or crown ethers; (2) nitrogen-containing compounds, generally selected from the group consisting of triethylamine, tetramethylethylenediamine(TMEDA), dipiperidinoethane(DPE), preferably TMEDA; and (3) phosphorus-containing compounds, generally hexamethylphosphoric triamide(HMPA). The amount of the polar additive depends on its type and the desired content of 1,2-addition polymerization structure and/or 3,4-addition polymerization structure in said copolymer. The content of the 1,2-addition polymerization structure and/or 3,4-addition polymerization structure is generally from 5 to 100% by weight.

The initiator used in the present invention is organolithium compounds, selected from the group consisting of monofunctional organolithium initiators, bifunctional organolithium initiators, multifunctional organolithium initiators or mixtures thereof. The organolithium initiator can be represented by the formula R(Li)ₓ, wherein R is an alkyl or aryl group having 1 to 20 carbon atoms and x is an integer of from 1 to 8. The amount of organolithium initiator used depends on the desired number-average molecular weight of the copolymer and is such that the number-average molecular weight of the copolymer is generally from 1×10⁴ to 60×10⁴.

The initiator used in the present invention can be any of monofunctional organolithium initiators disclosed in the prior art, selected from the group consisting of methyl lithium, ethyl lithium, isopropyl lithium, n-butyl lithium, sec-butyl lithium, tert-butyl lithium, tert-octyl lithium, phenyl lithium, 2-naphthyl lithium, 4-butylphenyl lithium, 4-phenylbutyl lithium, cyclohexyl lithium.

The initiator used in the present invention can be any of bifunctional organolithium initiators disclosed in the prior art, selected from (1) bislithioalkane bishalides or oligomeric bislithium compounds thereof, represented by the formulae LiR*Li and Li(DO)ₙR*(DO)ₙLi, respectively, where R* is an alkyl group having from 4 to 10 carbon atoms, DO is a structural unit derived from a conjugated diene having from 4 to 8 carbon atoms or mixtures thereof, preferably 1,3-pentadiene or isoprene, n is the degree of oligomerization and is generally from 2 to 8, preferably from 3 to 6, generally selected from the group consisting of 1,4-dilithiobutane, 1,2-dilithio-1,2-diphenylethane, 1,4-dilithio-1,1,4,4-tetraphenylbutane, 1,4-dimethyl-1,4-diphenylbutane dilithium, oligomeric butadiene-isoprene bislithium; (2) bislithium of naphthalene, generally selected from naphthyl lithium or α-methylnaphthyl lithium; and (3) bislithium of bisolefins or oligomeric bislithium compounds thereof, generally selected from the group consisting of 1,1'-(1,3- phenylene)-bis[3-methyl-1-(4-tolyl)pentyl]-bislithium, oligomeric 1,1'-(1,3-phenylene)-bis[3-methyl-1-(4-tolyl)-pentyl]isoprene bislithium, 1,1'-(1,4-phenylene)-bis[3-methyl-1-(4-tolyl)pentyl]bislithium, oligomeric 1,1'-(1,4-phenylene)-bis[3-methyl-1-(4-tolyl)pentyl]isoprene bislithium.

The initiator used in the present invention can be any of multifunctional organolithium initiators disclosed in the prior art, selected from those represented by the formulae R#Liₙ and T(R#Li)ₙ, where R^{#} is an alkyl or aryl group having from 4 to 20 carbon atoms, T is a metallic atom, typically tin(Sn), silicon(Si), lead(Pb), titanium(Ti), or germanium(Ge), n is the functionality of the initiator and is at least 3, typically from 3 to 150, preferably from 3 to 50, more preferably from 3 to 10. The multifunctional lithium-based initiator can be those obtained by reacting divinylbenzene(DVB) with alkyl lithium as described in GB2124228A, US3280084, EP0573893A2, CN1197806A. Multifunctional lithium-based initiator represented by the formula R^{#}Liₙ can also be those containing the above metal and represented by the formula T(R^{#}Li)ₙ, generally selected from the group consisting of tin-containing multifunctional orgnaolithium initiator represented by the formula Sn(R^{#}Li)ₙ, with R^{#} and n having the same meanings mentioned above, for example Sn(R^{#}Li)₄ as described in CN1148053A. Multifunctional lithium-based initiator can also be those having a functionality of at least 3 and capable of initiating the polymerization of conjugated dienes such as butadiene and isoprene and styrenic monomers, for example as described in US Patent No. 5,262,213 and US Patent No. 5,595,951.

The terminating agent used in the present invention can be those disclosed by the prior art and useful in anionic polymerization, such as water, methanol, ethanol, isopropanol. The terminating agent is generally used in an amount of 1 to 5% based on the mass of the monomers to be polymerized.

In the preferred embodiment for preparing the nanocomposite materials according to the present invention, the additives optionally used in step 3 are those conventionally used in the art. Generally, antioxidant is added, for example Irganox 1010(trade name, available from Ciba-Geigy AG, Switzerland), Antigene BHT or 2.6.4(trade name, 2, 6-di-tert-butyl-4-methylphenol, available from Sumitomo Chemical Co., Ltd., Japan) or a mixture thereof. The antioxidant can be used in an amount conventionally employed in the art, preferably in an amount from 0.1 to 10% by weight based on the monomers to be polymerized.

### Examples

The present invention is further described by the following examples and comparative examples, which shall not be construed as limited.

The apparatus and the corresponding test conditions used in the following Examples and Comparative Examples are as follows:

### 1. Glass transition temperature(T_{g})

Tg is measured by employing TA2910 type differntial scanning calorimeter, available from DuPont, at a temperature raising rate of 20°C/min.

### 2. Middle temperature in thermogravimetric analysis curve(T_{dc})

T_{dc} is measured by employing TA2980 type thermogravimetric analysis apparatus, available from DuPont, at a detecting temperature ranging from 100 to 600°C under an atmosphere of nitrogen.

### 3. X-ray diffraction pattern(XRD)

XRD is recorded by employing C/maxRB type X-ray diffractometer available from Nippon Rigaku K. K.(12kW X-ray, continuous scanning, CuK_{α} radiation, post-monochromator, tube voltage: 40kV, tube current: 100mA, scanning range: 1-25°, scanning rate: 2°/min).

### 4. Microstructures of the copolymers

The microstructures of the copolymers are analyzed by employing AVANCE-400 type NMR spectrometer available from Bruker, US(Solvent: CDCl₃).

### 5. Transmission electron micrograph(TEM)

The transmission electron micrograph is recorded by employing TECNAI G² 20 transmission electron microscope available from FEI(accelerating voltage: 200kV, cryo-microtome).

The organoclay mineral(intercalated clay) used in the following Examples and Comparative Examples is nano-scaled montmorillonite (OMMT, fine powders), supplied under the brand NANNOLIN DK4 by Zhejiang Fenghong Clay Chemicals Co., Ltd., montmorillonite content: 95 to 98% by weight, average particle size: 25×10³nm, density: 1.8g/cm³, apparent density: 0.45g/cm³, average thickness of the platelets: less than 25nm, moisture content: less than 3% by weight, total cation exchange capacity: 110meg/100g. The interlayer distance of the unmodified clay is 1.2nm and that of the organoclay is 3.59nm. The organoclay dispersion is obtained by dispersing the organoclay in a dispersing medium and then stirring uniformly.

### Example 1

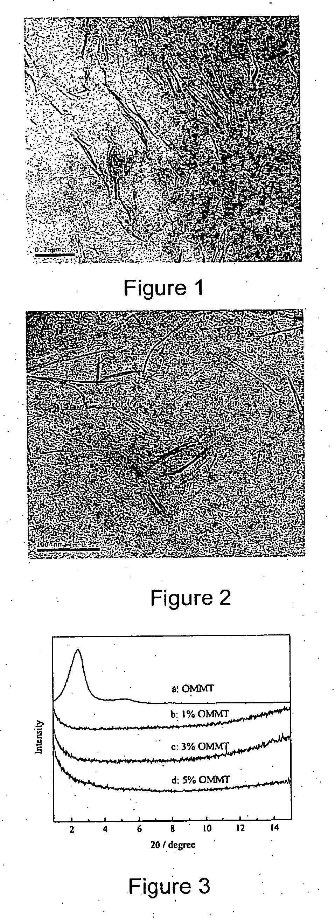

Into a 500ml reactor are charged 72g of cyclohexane and 9g of a monomer mixture, comprising butadiene, isoprene and styrene in a weight ratio of 35: 35: 30, followed by the addition of tetramethylethylenediamine(TMEDA) as the polar additive in a molar ratio of TMEDA to Li of 1.0 and finally 7.0ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-isoprene-styrene copolymer/clay nanocomposite material is obtained. The product butadiene-isoprene-styrene copolymer/clay nanocomposite material has a styrene content of 22.2% by weight, 1,2-polybutadiene structure content of 27.8% by weight, 1,4-polybutadiene content of 27.1% by weight, 3,4-polyisoprene content of 15.2% by weight, 1,4-polyisoprene content of 7.7% by weight, clay content of 3.0% by weight, glass transition temperature(T_{g}) of -29.7°C, middle temperature(T_{dc}) of 440.0°C in the thermogravimetric curve[the peak temperature in the differential thermogravimetric curve is taken as the middle temperature(T_{dc}) in the thermogravimetric curve; see, for example, Jisheng MA, Zongneng QI and Shufan ZHANG, "Synthesis, structure and property of polyurethane elastomers/montmorillonite nanocomposite materials, Gaofenzi Xue Bao, 3(3), 325(2001)]. The non-intercalated clay has an X-ray diffraction pattern shown by Curve a in Figure 3; and the butadiene-isoprene-styrene copolymer/clay nanocomposite material has an X-ray diffraction pattern shown by Curve c in Figure 3. It can be seen from Figure 3 that Curve a has a 001 diffraction peak at 2.46°, which corresponds to an interlayer distance of 3.59nm; and the butadiene-isoprene-styrene copolymer/clay nanocomposite material(see Curve c) exhibits no apparent diffraction peaks in the range of from 1° to 10°, which demonstrates that the laminar layers of montmorillonite are completely delaminated in the polymer matrix and a delaminated nanocomposite material is obtained(Figure 3). TEM also demonstrates that the laminar layers of clay minerals are delaminated from each other, completely separated from each other and uniformly dispersed in the butadiene/isoprene/styrene copolymer matrix in a disordered state, thus the resultant nanocomposite material is of a delaminated structure(see Figure 2).

### Example 2

Into a 500ml reactor are charged 72g of cyclohexane and 9g of a monomer mixture, comprising butadiene, isoprene and styrene in a weight ratio of 35: 35: 30, followed by the addition of tetramethylethylenediamine(TMEDA) as the polar additive in a molar ratio of TMEDA to Li of 1.0 and finally 2.3ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-isoprene-styrene copolymer/clay nanocomposite material is obtained. The product butadiene-isoprene-styrene copolymer/clay nanocomposite material has a styrene content of 24.6% by weight, 1,2-polybutadiene structure content of 32.9% by weight, 1,4-polybutadiene content of 23.1% by weight, 3,4-polyisoprene content of 18.7% by weight, 1,4-polyisoprene content of 0.7% by weight, clay content of 1.0% by weight, glass transition temperature(T_{g}) of -15.1°C, middle temperature(T_{dc}) of 428.8°C in the thermogravimetric curve. The butadiene-isoprene-styrene copolymer/clay nanocomposite material has an X-ray diffraction pattern shown by Curve b in Figure 3. It can be seen from Figure 3 that Curve a has a 001 diffraction peak at 2.46°, which corresponds to an interlayer distance of 3.59nm; and the butadiene-isoprene-styrene copolymer/clay nanocomposite material(see Curve b) exhibits no apparent diffraction peaks in the range of from 1° to 10°, which demonstrates that the laminar layers of montmorillonite are completely delaminated in the polymer matrix and a delaminated nanocomposite material is obtained. TEM also demonstrates that the laminar layers of clay minerals are delaminated from each other, completely separated from each other and uniformly dispersed in the butadiene/isoprene/styrene copolymer matrix in a disordered state, thus the resultant nanocomposite material is of a delaminated structure(see Figure 1).

### Example 3

Into a 500ml reactor are charged 72g of cyclohexane and 9g of a monomer mixture, comprising butadiene, isoprene and styrene in a weight ratio of 35: 35: 30, followed by the addition of tetramethylethylenediamine(TMEDA) as the polar additive in a molar ratio of TMEDA to Li of 1.0 and finally 7.0ml of a dispersion of the intercalated clay(4g intercalated clay/100ml of toluene). The stirring is started and the resultant mixture is heated to a temperature of 50°C. Then 0.34ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-isoprene-styrene copolymer/ clay nanocomposite material is obtained. The product butadiene-isoprene-styrene copolymer/clay nanocomposite material has a styrene content of 22.6% by weight, 1,2-polybutadiene structure content of 28.8% by weight, 1,4-polybutadiene content of 26.4% by weight, 3,4-polyisoprene content of 15.6% by weight, 1,4-polyisoprene content of 6.6% by weight, clay content of 3.0% by weight, glass transition temperature(T_{g}) of -28.1°C, middle temperature(T_{dc}) of 440.8°C in the thermogravimetric curve. X-ray diffraction pattern and TEM demonstrate that the laminar layers of clay minerals are delaminated from each other, completely separated from each other and uniformly dispersed in the butadiene/isoprene/styrene copolymer matrix in a disordered state, thus the resultant nanocomposite material is of a delaminated structure.

### Example 4

Into a 500ml reactor are charged 72g of toluene and 9g of a monomer mixture, comprising butadiene, isoprene and styrene in a weight ratio of 35: 35: 30, followed by the addition of tetramethylethylenediamine(TMEDA) as the polar additive in a molar ratio of TMEDA to Li of 1.0 and finally 11.7ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-isoprene-styrene copolymer/clay nanocomposite material is obtained. The product butadiene-isoprene-styrene copolymer/clay nanocomposite material has a styrene content of 17.3% by weight, 1,2-polybutadiene structure content of 26.0% by weight, 1,4-polybutadiene content of 35.0% by weight, 3,4-polyisoprene content of 12.5% by weight, 1,4-polyisoprene content of 9.2% by weight, clay content of 5.0% by weight, glass transition temperature(T_{g}) of -39.6°C, middle temperature(T_{dc}) of 432.6°C in the thermogravimetric curve. The butadiene-isoprene-styrene copolymer/clay nanocomposite material has an X-ray diffraction pattern shown by Curve d in Figure 3. It can be seen from Figure 3 that Curve a has a 001 diffraction peak at 2.46°, which corresponds to an interlayer distance of 3.59nm; and the butadiene-isoprene-styrene copolymer/clay nanocomposite material(see Curve d) exhibits no apparent diffraction peaks in the range of from 1° to 10°, which demonstrates that the laminar layers of montmorillonite are completely delaminated in the polymer matrix and a delaminated nanocomposite material is obtained. TEM also demonstrates that the laminar layers of clay minerals are delaminated from each other, completely separated from each other and uniformly dispersed in the butadiene/isoprene/styrene copolymer matrix in a disordered state, thus the resultant nanocomposite material is of a delaminated structure.

### Example 5

Into a 500ml reactor are charged 72g of xylene and 9g of a monomer mixture, comprising butadiene, isoprene and styrene in a weight ratio of 50: 30: 20, followed by the addition of tetramethylethylenediamine(TMEDA) as the polar additive in a molar ratio of TMEDA to Li of 0.5 and finally 7.0ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-isoprene-styrene copolymer/clay nanocomposite material is obtained. The product butadiene-isoprene-styrene copolymer/clay nanocomposite material has a styrene content of 18.6% by weight, 1,2-polybutadiene structure content of 30.0% by weight, 1,4-polybutadiene content of 23.5% by weight, 3,4-polyisoprene content of 17.6% by weight, 1,4-polyisoprene content of 10.3% by weight, clay content of 3.0% by weight, glass transition temperature(T_{g}) of -23.2°C, middle temperature(T_{dc}) of 435.6°C in the thermogravimetric curve. X-ray diffraction pattern and TEM demonstrate that the laminar layers of clay minerals are delaminated from each other, completely separated from each other and uniformly dispersed in the butadiene/isoprene/styrene copolymer matrix in a disordered state, thus the resultant nanocomposite material is of a delaminated structure.

### Comparative Example 1

Into a 500ml reactor are charged 72g of toluene and 9g of a monomer mixture, comprising butadiene, isoprene and styrene in a weight ratio of 35: 35: 30, followed by the addition of tetramethylethylenediamine(TMEDA) as the polar additive in a molar ratio of TMEDA to Li of 1.0. The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-isoprene-styrene copolymer is obtained. The product butadiene-isoprene-styrene copolymer has a styrene content of 23.8% by weight, 1,2-polybutadiene structure content of 33.2% by weight, 1,4-polybutadiene content of 21.4% by weight, 3,4-polyisoprene content of 21.1 % by weight, 1,4-polyisoprene content of 0.5% by weight, glass transition temperature(T_{g}) of -10.0°C, and middle temperature(T_{dc}) of 425.1°C in the thermogravimetric curve.

### Example 6

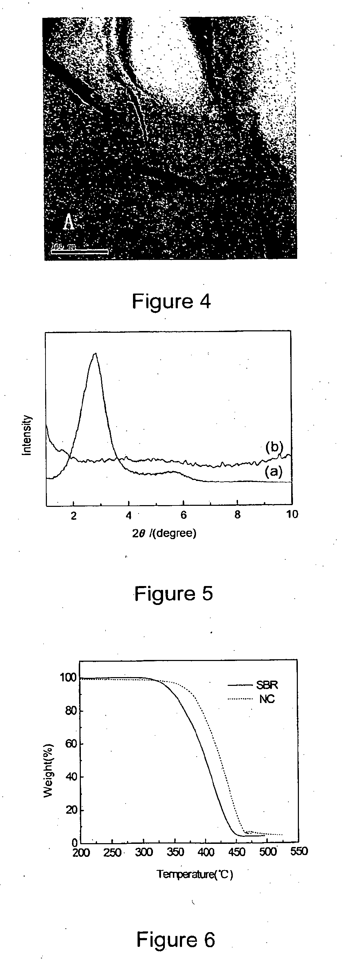

Into a 500ml reactor are charged 72g of cyclohexane and 9g of a monomer mixture, comprising butadiene and styrene in a weight ratio of 7: 3, followed by the addition of tetramethylethylenediamine(TMEDA) as the polar additive in a molar ratio of TMEDA to Li of 1.0 and finally 5.2ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-styrene copolymer/clay nanocomposite material is obtained. The product butadiene-styrene copolymer/clay nanocomposite material has a styrene content of 29.7% by weight, 1,2-polybutadiene structure content of 39.6% by weight, 1,4-polybutadiene content of 30.7% by weight, clay content of 2.3% by weight, glass transition temperature(T_{g}) of -20.4°C, middle temperature(T_{dc}) of 436.8°C in the thermogravimetric curve(see Curve NC in Figure 6). The non-intercalated clay has an X-ray diffraction pattern shown by Curve a in Figure 5; and the butadiene-styrene copolymer/clay nanocomposite material has an X-ray diffraction pattern shown by Curve b in Figure 5. It can be seen from Figure 5 that Curve a has a 001 diffraction peak at 2.46°, which corresponds to an interlayer distance of 3.59nm; and the butadiene-styrene copolymer/clay nanocomposite material(see Curve b) exhibits no apparent diffraction peaks in the range of from 1° to 10°, which demonstrates that the laminar layers of montmorillonite are completely delaminated in the polymer matrix and a delaminated nanocomposite material is obtained(Figure 5). TEM also demonstrates that the laminar layers of clay minerals are delaminated from each other, completely separated from each other and uniformly dispersed in the butadiene/styrene copolymer matrix in a disordered state, thus the resultant nanocomposite material is of a delaminated structure(see Figure 4).

### Example 7

Into a 500ml reactor are charged 72g of cyclohexane and 9g of a monomer mixture, comprising butadiene and styrene in a weight ratio of 7: 3, followed by the addition of tetramethylethylenediamine(TMEDA) as the polar additive in a molar ratio of TMEDA to Li of 1.0 and finally 9.9ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-styrene copolymer/clay nanocomposite material is obtained. The product butadiene-styrene copolymer/clay nanocomposite material has a styrene content of 30.3% by weight, 1,2-polybutadiene structure content of 40.6% by weight, 1,4-polybutadiene content of 29.1% by weight, clay content of 4.4% by weight, glass transition temperature(T_{g}) of -19.4°C, middle temperature(T_{dc}) of 437.8°C in the thermogravimetric curve. X-ray diffraction pattern and TEM demonstrate that the laminar layers of clay minerals are delaminated from each other, completely separated from each other and uniformly dispersed in the butadiene/styrene copolymer matrix in a disordered state, thus the resultant nanocomposite material is of a delaminated structure.

### Example 8

Into a 500ml reactor are charged 72g of cyclohexane and 9g of a monomer mixture, comprising butadiene and styrene in a weight ratio of 7: 3, followed by the addition of tetramethylethylenediamine(TMEDA) as the polar additive in a molar ratio of TMEDA to Li of 1.0 and finally 5.2ml of a dispersion of the intercalated clay(4g intercalated clay/100ml of toluene). The stirring is started and the resultant mixture is heated to a temperature of 50°C. Then 0.34ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-styrene copolymer/clay nanocomposite material is obtained. The product butadiene-styrene copolymer/clay nanocomposite material has a styrene content of 29.3% by weight, 1,2-polybutadiene structure content of 39.8% by weight, 1,4-polybutadiene content of 30.9% by weight, clay content of 2.3% by weight, glass transition temperature(T_{g}) of -21.3°C, middle temperature(T_{dc}) of 435.6°C in the thermogravimetric curve. X-ray diffraction pattern and TEM demonstrate that the laminar layers of clay minerals are delaminated from each other, completely separated from each other and uniformly dispersed in the butadiene/styrene copolymer matrix in a disordered state, thus the resultant nanocomposite material is of a delaminated structure.

### Example 9

Into a 500ml reactor are charged 72g of toluene and 9g of a monomer mixture, comprising butadiene and styrene in a weight ratio of 7: 3, followed by the addition of tetramethylethylenediamine(TMEDA) as the polar additive in a molar ratio of TMEDA to Li of 1.0 and finally 19.8ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-styrene copolymer/clay nanocomposite material is obtained. The product butadiene-styrene copolymer/clay nanocomposite material has a styrene content of 29.1% by weight, 1,2-polybutadiene structure content of 41.3% by weight, 1,4-polybutadiene content of 29.6% by weight, clay content of 8.8% by weight, glass transition temperature(T_{g}) of -19.1°C, middle temperature(T_{dc}) of 439.7°C in the thermogravimetric curve. X-ray diffraction pattern and TEM demonstrate that the laminar layers of clay minerals are delaminated from each other, completely separated from each other and uniformly dispersed in the butadiene/styrene copolymer matrix in a disordered state, thus the resultant nanocomposite material is of a delaminated structure.

### Example 10

Into a 500ml reactor are charged 72g of xylene and 9g of a monomer mixture, comprising butadiene and styrene in a weight ratio of 8: 2, followed by the addition of 5.2ml of a dispersion of the intercalated clay(4g intercalated clay/100ml of xylene). The stirring is started and the resultant mixture is heated to a temperature of 50°C. Then tetramethylethylenediamine(TMEDA) is charged as the polar additive in a molar ratio of TMEDA to Li of 0.5, followed by the addition of 0.34ml of n-butyl lithium solution(0.1315M in cyclohexane). After a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-styrene copolymer/clay nanocomposite material is obtained. The product butadiene-styrene copolymer/clay nanocomposite material has a styrene content of 19.3% by weight, 1,2-polybutadiene structure content of 33.7% by weight, 1,4-polybutadiene content of 47.0% by weight, clay content of 2.3% by weight, glass transition temperature(T_{g}) of -45.3°C, and middle temperature(T_{dc}) of 434.9°C in the thermogravimetric curve. X-ray diffraction pattern and TEM demonstrate that the laminar layers of clay minerals are delaminated from each other, completely separated from each other and uniformly dispersed in the butadiene/styrene copolymer matrix in a disordered state, thus the resultant nanocomposite material is of a delaminated structure.

### Comparative Example 2

Into a 500ml reactor are charged 72g of toluene and 9g of a monomer mixture, comprising butadiene and styrene in a weight ratio of 7: 3, followed by the addition of tetramethylethylenediamine(TMEDA) as the polar additive in a molar ratio of TMEDA to Li of 1.0. The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-styrene copolymer is obtained. The product butadiene-styrene copolymer has a styrene content of 29.4% by weight, 1,2-polybutadiene structure content of 39.3% by weight, 1,4-polybutadiene content of 31.3% by weight, glass transition temperature(T_{g}) of -24.4°C, middle temperature(T_{dc}) of 415.2°C in the thermogravimetric curve(see Curve SBR in Figure 6).

### Example 11

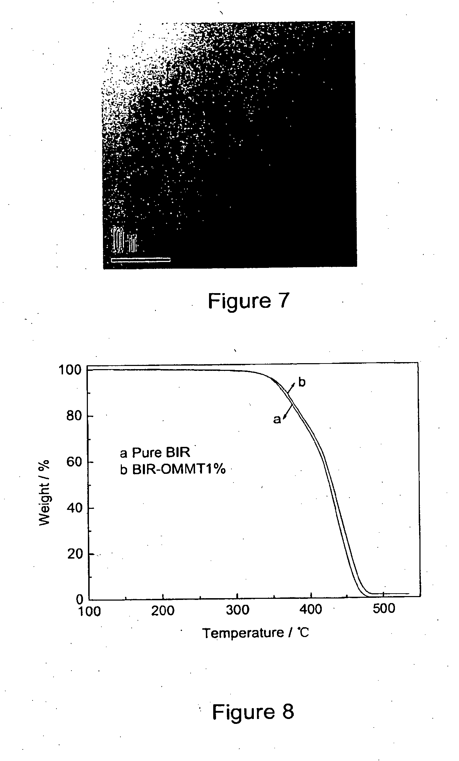

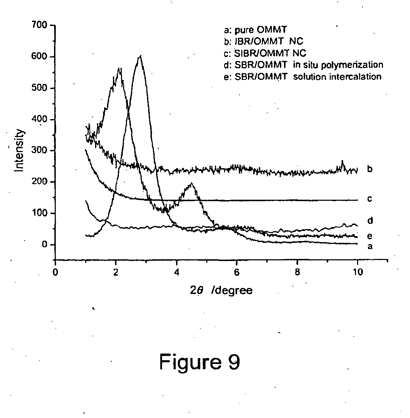

Into a 500ml reactor are charged 72g of cyclohexane and 9g of a monomer mixture, comprising butadiene and isoprene in a weight ratio of 5: 5, followed by the addition of tetramethylethylenediamine(TMEDA) as the polar additive in a molar ratio of TMEDA to Li of 0.2 and finally 6.7ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-isoprene copolymer/clay nanocomposite material is obtained. The product butadiene-isoprene copolymer/clay nanocomposite material has 1,2-polybutadiene structure content of 8.9% by weight, 1,4-polybutadiene content of 42.6% by weight, 3,4-polyisoprene content of 5.8% by weight, 1,4-polyisoprene content of 42.7% by weight, clay content of 3.0% by weight, glass transition temperature(T_{g}) of -73.0°C, middle temperature(T_{dc}) of 451.4°C in the thermogravimetric curve(Figure 8, T_{dc} of a pure butadiene-isoprene copolymer: 436.4°C). X-ray diffraction detection indicates that there are no apparent diffraction peaks in the range of from 1° to 10°, which demonstrates that the laminar layers of montmorillonite are completely delaminated in the polymer matrix and a delaminated nanocomposite material is obtained(Figure 9). TEM also demonstrates that the laminar layers of clay minerals are delaminated from each other, completely separated from each other and uniformly dispersed in the copolymer matrix in a disordered state, thus the resultant nanocomposite material is of a delaminated structure(see Figure 7).

### Example 12

Into a 500ml reactor are charged 72g of cyclohexane and 9g of a monomer mixture, comprising butadiene and isoprene in a weight ratio of 3: 7, followed by the addition of tetramethylethylenediamine(TMEDA) as the polar additive in a molar ratio of TMEDA to Li of 0.2 and finally 2.3ml of a dispersion of the intercalated clay(4g intercalated clay/100ml of toluene). The stirring is started and the resultant mixture is heated to a temperature of 50°C. Then 0.46ml of n-butyl lithium solution(0.1315M in cyclohexane) is charged and after a reaction time of 6 hours, to the reaction mixture is added 0.2ml of ethanol as the terminating agent, followed by 0.2g of antioxidant(a mixture of Irganox 1010 and Antigene BHT(2.6.4) in a weight ratio of 1: 1), and then the polymer solution is worked up by conventional methods. After being dried, a butadiene-isoprene copolymer/clay nanocomposite material is obtained. The product butadiene-isoprene copolymer/clay nanocomposite material has 1,2-polybutadiene structure content of 5.8% by weight, 1,4-polybutadiene content of 25.0% by weight, 3,4-polyisoprene content of 9.1% by weight, 1,4-polyisoprene content of 60.1% by weight, clay content of 1.0% by weight, glass transition temperature(T_{g}) of -63.1°C, middle temperature(T_{dc}) of 450.4°C in the thermogravimetric curve(T_{dc} of a pure butadiene-isoprene copolymer: 432.4°C). X-ray diffraction detection indicates that there are no apparent diffraction peaks in the range of from 1° to 10°, which demonstrates that the laminar layers of montmorillonite are completely delaminated in the polymer matrix and a delaminated nanocomposite material is obtained. TEM also demonstrates that the laminar layers of clay minerals are delaminated from each other, completely separated from each other and uniformly dispersed in the copolymer matrix in a disordered state, thus the resultant nanocomposite material is of a delaminated structure.

### Comparative Example 3

5.6g OMMT is intensively stirred in 100ml of toluene for 3 hours. To the resultant dispersion is charged with 800ml of SBR(Brand: SBR1500, available from Qilu Petrochemical Co., Ltd.) in toluene(30g of SBR/100ml of toluene), and then the resultant mixture is intensively stirred at 50°C for 4 hours. The resultant product is settled in ethanol and then is rolled at 110°C by using a double-roller mixer to form a SBR/OMMT nanocomposite material, which has a clay content of 2.3% by weight and T_{dc} of 420.8°C. X-ray diffraction detection indicates that there is a diffraction peaks at 2.14°, which demonstrates that the laminar layers of montmorillonite are intercalated with polymers and a intercalated nanocomposite material is obtained (Figure 9).

### Comparative Example 4

Into a 5L reactor are charged 2000g of cyclohexane and 240g of a monomer mixture, comprising butadiene and styrene in a weight ratio of 7: 3, followed by the addition of tetramethylethylenediamine(TMEDA) as the polar additive in a molar ratio of TMEDA to Li of 1.0. The stirring is started and the resultant mixture is heated to a temperature of 50°C. After the induction period, 12.3ml of n-butyl lithium solution(0.1315M in cyclohexane) is charged and after a reaction time of 6 hours, to the reaction mixture is added 0.2ml of ethanol as the terminating agent, followed by 2.4g of antioxidant(a mixture of Irganox 1010 and Antigene BHT(2.6.4) in a weight ratio of 1: 1), and then the polymer solution is worked up by conventional methods. The resultant product has a styrene content of 29.5% by weight, 1,2-polybutadiene structure content of 39.7% by weight, 1,4-polybutadiene content of 30.8% by weight. 5.6g OMMT is intensively stirred in 100ml of toluene for 3 hours to obtain a dispersion. Separately, the product as mentioned above is dissolved in 750ml of toluene to form a solution, which is then mixed with the dispersion as mentioned above in a 1 L stirred tank. The resultant mixture is intensively stirred at 50°C for 4 hours. The resultant product is settled in ethanol and then is rolled at 110°C by using a double-roller mixer to form a SBR/OMMT nanocomposite material, which has a clay content of 2.3% by weight and T_{dc} of 425.6°C. X-ray diffraction detection indicates that there is a diffraction peaks at 2.21°(OMMT has a 001 diffraction peak at 2.83°), which demonstrates that the laminar layers of montmorillonite are intercalated with polymers and a intercalated nanocomposite material is obtained.

## Claims

1. A copolymer/clay nanocomposite materials, comprising a copolymer of at least two monomers selected from the group consisting of butadiene, isoprene and styrene and a clay mineral dispersed therein, wherein said copolymer has a number-average molecular weight of from 1×10⁴ to 60×10⁴, a content of 1,2-structure and/or 3,4-structure of from 5 to 100% by weight, a content of 1,4-structure of from 95 to 0% by weight and a content of said clay mineral of from 0.5 to 50 parts by weight per 100 parts by weight of said copolymer.

2. The copolymer/clay nanocomposite materials according to claim 1, wherein said copolymer has a number-average molecular weight of from 5×10⁴ to 40×10⁴.

3. The copolymer/clay nanocomposite materials according to claim 2, wherein said copolymer has a number-average molecular weight of from 10×10⁴ to 30×10⁴.

4. The copolymer/clay nanocomposite materials according to claim 1, wherein said copolymer is a butadiene/styrene copolymer, with the content of the structural units derived from styrene being 10 to 50% by weight, preferably from 15 to 35% by weight, and correspondingly, the content of the structural units derived from butadiene being from 50 to 90% by weight, preferably from 65 to 85% by weight.

5. The copolymer/clay nanocomposite materials according to claim 1, wherein said copolymer is a butadiene/isoprene/styrene copolymer, with the content of the structural units derived from styrene being 10 to 50% by weight, preferably from 15 to 35% by weight, and correspondingly, the content of the structural units derived from butadiene and isoprene being from 50 to 90% by weight, preferably from 65 to 85% by weight, and the weight ratio of the structural units derived from butadiene to those derived from isoprene being from 10: 90 to 90: 10, preferably from 30: 70 to 70: 30.

6. The copolymer/clay nanocomposite materials according to claim 1, wherein said copolymer is a butadiene/isoprene copolymer, with the content of the structural units derived from isoprene being from 10 to 90% by weight, preferably from 30 to 70% by weight, and correspondingly, the content of the structural units derived from butadiene being from 10 to 90% by weight, preferably from 30 to 70% by weight.

7. The copolymer/clay nanocomposite materials according to any one of claims 1 to 6, wherein the content of the clay mineral ranges from 1 to 30 parts by weight per 100 parts by weight of said copolymer.

8. The copolymer/clay nanocomposite materials according to claim 7, wherein the content of the clay mineral ranges from 1 to 15 parts by weight per 100 parts by weight of said copolymer.

9. A method for preparing the copolymer/clay nanocomposite materials according to any one of claims 1 to 8, comprising charging a reactor with an organic hydrocarbon solvent, at least two monomers selected from the group consisting of butadiene, isoprene and styrene, optional polar additives and an organoclay mineral dispersed in a dispersing medium; stirring uniformly to form a stable monomers/ organoclay dispersion; then raising the temperature of the reaction system to 30 to 80°C; initiating the polymerization reaction by adding an organolithium initiator; after the complete polymerization of all monomers, terminating the reaction and optionally adding a conventional additive; working up the resultant polymer solution by a conventional manner and then drying.

10. The process according to claim 9, wherein said clay mineral is layered aluminosilicate having a montmorillonite content of at least 85% by weight, a particle size ranging from 1×10³ to 70×10³nm and a cation exchange capacity of from 40 to 200meg/100g.

11. The method according to claim 10, wherein said clay mineral is layered aluminosilicate having a montmorillonite content of at least 95% by weight, a particle size ranging from 20×10³ to 30×10³nm and a cation exchange capacity of from 90 to 110meg/100g.

12. The method according to any one of claims 9 to 11, wherein said organic hydrocarbon solvent is selected from the group consisting of benzene, toluene, ethylebenzene, xylene, pentane, hexane, heptane, octane, cyclohexane, mixed xylenes and raffinate oil, preferably toluene, xylene, hexane, cyclohexane and raffinate oil.

13. The method according to any one of claims 9 to 11, wherein said polar additive is oxygen-containing compounds selected from the group consisting of diethyl ether, tetrahydrofuran, crown ethers, compounds represented by the formulae R₁OCH₂CH₂OR₂ and R₁OCH₂CH₂OCH₂CH₂OR₂, wherein R₁ and R₂ can be same or different and represent alkyl having 1 to 6 carbon atoms.

14. The method according to any one of claims 9 to 11, wherein said polar additive is nitrogen-containing compounds selected from the group consisting of triethylamine, tetramethylethylenediamine, dipiperidinoethane.

15. The method according to any one of claims 9 to 11, wherein said polar additive is phosphorus-containing compounds selected from hexamethylphosphoric triamide.

16. The method according to any one of claims 9 to 11, wherein said organolithium initiator is a monofunctional organolithium initiator represented by RLi, where R is an alkyl or aryl group having from 1 to 20 carbon atoms.

17. The method according to claim 16, wherein said monofunctional organolithium initiator is selected from the group consisting of methyl lithium, ethyl lithium, isopropyl lithium, n-butyl lithium, sec-butyl lithium, tert-butyl lithium, tert-octyl lithium, phenyl lithium 2-naphthayl lithium, 4-butylphenyl lithium, 4-phenylbutyl lithium or cyclohexyl lithium.

18. The method according to any one of claims 9 to 11, wherein said dispersing medium is selected from the group consisting of benzene, toluene, ethylbenzene, xylene, mixed aromatics, diethyl ether, triethylamine, hexamethylphosphoric triamide or mixtures thereof, preferably toluene, xylene or a mixture thereof.

## Patentansprüche

1. Copolymer/Ton-Nanoverbundmaterialien, umfassend ein Copolymer aus mindestens zwei Monomeren ausgewählt aus der Gruppe bestehend aus Butadien, Isopren und Styrol und ein darin dispergiertes Tonmaterial, wobei das Copolymer ein durchschnittliches Molekulargewicht (Zahlenmittel) von 1x10⁴ bis 60x10⁴, einen Gehalt an 1,2-Struktur und/oder 3,4-Struktur von 5 bis 100 Gew.%, einen Gehalt an 1,4-Struktur von 95 bis 0 % und einen Gehalt an Tonmaterial von 0,5 bis 50 Gewichtsteile auf 100 Gewichtsteile des Copolymers aufweist.

2. Copolymer/Ton-Nanoverbundmaterialien nach Anspruch 1, wobei das Copolymer ein durchschnittliches Molekulargewicht (Zahlenmittel) von 5x10⁴ bis 40x10⁴ aufweist.

3. Copolymer/Ton-Nanoverbundmaterialien nach Anspruch 2, wobei das Copolymer ein durchschnittliches Molekulargewicht (Zahlenmittel) von 10x10⁴ bis 30x10⁴ aufweist.

4. Copolymer/Ton-Nanoverbundmaterialien nach Anspruch 1, wobei das Copolymer ein Butadien/Styrol-Copolymer ist, wobei der Gehalt der von Styrol abgeleiteten Struktureinheiten 10 bis 50 Gew.%, vorzugsweise 15 bis 35 Gew.% beträgt, und entsprechend der Gehalt an von Butadien abgeleiteten Struktureinheiten 50 bis 90 Gew.%, vorzugsweise 65 bis 85 Gew.% beträgt.

5. Copolymer/Ton-Nanoverbundmaterialien nach Anspruch 1, wobei das Copolymer ein Butadien/Isopren/Styrol-Copolymer ist, wobei der Gehalt der von Styrol abgeleiteten Struktureinheiten 10 bis 50 Gew.%, vorzugsweise 15 bis 35 Gew.% beträgt, und entsprechend der Gehalt der von Butadien und Isopren abgeleiteten Struktureinheiten 50 bis 90 Gew.%, vorzugsweise 65 bis 85 Gew.% beträgt, und das Gewichtsverhältnis der von Butadien abgeleiteten Struktureinheiten zu den von Isopren abgeleiteten Struktureinheiten 10:90 bis 90:10, vorzugsweise 30:70 bis 70:30 beträgt.

6. Copolymer/Ton-Nanoverbundmaterialien nach Anspruch 1, wobei das Copolymer ein Butadien/Isopren-Copolymer ist, wobei der Gehalt an von Isopren abgeleiteten Struktureinheiten 10 bis 90 Gew.%, vorzugsweise 30 bis 70 Gew.% beträgt, und entsprechend der Gehalt an von Butadien abgeleiteten Struktureinheiten 10 bis 90 Gew.%, vorzugsweise 30 bis 70 Gew.% beträgt.

7. Copolymer/Ton-Nanoverbundmaterialien nach einem der Ansprüche 1 bis 6, wobei der Gehalt an Tonmineral im Bereich von 1 bis 30 Gewichtsteilen auf 100 Gewichtsteile des Copolymers liegt.

8. Copolymer/Ton-Nanoverbundmaterialien nach Anspruch 7, wobei der Gehalt an Tonmineral im Bereich von 1 bis 15 Gewichtsteilen auf 100 Gewichtsteile des Copolymers liegt.

9. Verfahren zur Herstellung der Copolymer/Ton-Nanoverbundmaterialien nach einem der Ansprüche 1 bis 8, umfassend Beschicken eines Reaktors mit einem organischen Kohlenwasserstofflösungsmittel, mindestens zwei Monomeren ausgewählt aus der Gruppe bestehend aus Butadien, Isopren und Styrol, gegebenenfalls polaren Additiven und einem in einem Dispergiermedium dispergierten Organotonmaterial; gleichförmiges Rühren, um eine stabile Dispersion aus Monomeren/Organoton zu bilden; anschließendes Erhöhen der Temperatur des Reaktionssystems auf 30 bis 80 °C; Initiieren der Polymerisationsreaktion durch Hinzufügen eines Organolithiuminitiators; Beendigen der Reaktion und gegebenenfalls Hinzufügen eines konventionellen Additivs nach der vollständigen Polymerisation aller Monomere; Aufarbeiten der resultierenden Polymerlösung in konventioneller Weise und anschließendes Trocknen.

10. Verfahren nach Anspruch 9, wobei das Tonmaterial Schichtaluminiumsilikat mit einem Montmorillonitgehalt von mindestens 85 Gew.%, einer Partikelgröße im Bereich von 1x10³ bis 70x10³ nm und einer Kationenaustauschkapazität von 40 bis 200 mÄq/100 g ist.

11. Verfahren nach Anspruch 10, wobei das Tonmaterial Schichtaluminiumsilikat mit einem Montmorillonitgehalt von mindestens 95 Gew.%, einer Partikelgröße im Bereich von 20x10³ bis 30x10³ nm und einer Kationenaustauschkapazität von 90 bis 110 mÄq/100 g ist.

12. Verfahren nach einem der Ansprüche 9 bis 11, wobei das organische Kohlenwasserstofflösungsmittel ausgewählt ist aus der Gruppe bestehend aus Benzol, Toluol, Ethylbenzol, Xylol, Pentan, Hexan, Heptan, Octan, Cyclohexan, gemischten Xylolen und Raffinatöl, vorzugsweise Toluol, Xylol, Hexan, Cyclohexan und Raffinatöl.

13. Verfahren nach einem der Ansprüche 9 bis 11, wobei das polare Additiv sauerstoffhaltige Verbindungen ausgewählt aus der Gruppe bestehend aus Diethylether, Tetrahydrofuran, Kronenethem, Verbindungen mit den Formeln R₁OCH₂CH₂OR₂ und R₁OCH₂CH₂OCH₂CH₂OR₂ ist, wobei R₁ und R₂ gleich oder verschieden sein können und für Alkyl mit 1 bis 6 Kohlenstoffatomen stehen.

14. Verfahren nach einem der Ansprüche 9 bis 11, wobei das polare Additiv stickstoffhaltige Verbindungen ausgewählt aus der Gruppe bestehend aus Triethylamin, Tetramethylethylendiamin, Dipiperinoethan ist.

15. Verfahren nach einem der Ansprüche 9 bis 11, wobei das polare Additiv phosphorhaltige Verbindungen ausgewählt aus Hexamethylphosphorsäuretriamid ist.

16. Verfahren nach einem der Ansprüche 9 bis 11, wobei der Organolithiuminitiator ein monofunktionaler Organolithiuminitiator ist, der durch RLi wiedergegeben wird, wobei R eine Alkyl- oder Arylgruppe mit 1 bis 20 Kohlenstoffatomen ist.

17. Verfahren nach Anspruch 16, wobei der monofunktionale Organolithiuminitiator ausgewählt ist aus der Gruppe bestehend aus Methyllithium, Ethyllithium, Isopropyllithium, n-Butyllithium, sec-Butyllithium, tert-Butyllithium, tert-Octyllithium, Phenyllithium, 2-Naphthyllithium, 4-Butylphenyllithium, 4-Phenylbutyllithium oder Cyclohexyllithium.

18. Verfahren nach einem der Ansprüche 9 bis 11, wobei das Dispergiermedium ausgewählt ist aus der Gruppe bestehend aus Benzol, Toluol, Ethylbenzol, Xylol, gemischten Aromaten, Diethylether, Triethylamin, Hexamethylphosphorsäuretriamid oder Mischungen davon, vorzugsweise Toluol, Xylol oder einer Mischung davon.

## Revendications

1. Matériaux nanocomposites de copolymère/argile, comprenant un copolymère d'au moins deux monomères choisis dans le groupe constitué par le butadiène, l'isoprène et le styrène et un minéral argileux dispersé dans celui-ci, dans lequel ledit copolymère a une masse moléculaire moyenne en nombre de 1 x 10⁴ à 60 x 10⁴, une teneur en structure 1,2 et/ou en structure 3,4 de 5 à 100 % en poids, une teneur en structure 1,4 de 95 à 0 % en poids et une teneur dudit minéral argileux de 0,5 à 50 parties en poids pour 100 parties en poids dudit copolymère.

2. Matériaux nanocomposites de copolymère/argile selon la revendication 1, dans lesquels ledit copolymère a une masse moléculaire moyenne en nombre de 5 x 10⁴ à 40 x 10⁴.

3. Matériaux nanocomposites de copolymère/argile selon la revendication 2, dans lesquels ledit copolymère a une masse moléculaire moyenne en nombre de 10x10⁴ à 30x10⁴.

4. Matériaux nanocomposites de copolymère/argile selon la revendication 1, dans lesquels ledit copolymère est un copolymère de butadiène/styrène, la teneur des motifs structuraux issus de styrène étant de 10 à 50 % en poids, de préférence de 15 à 35 % en poids, et de façon correspondante, la teneur des motifs structuraux issus de butadiène étant de 50 à 90 % en poids, de préférence de 65 à 85 % en poids.

5. Matériaux nanocomposites de copolymère/argile selon la revendication 1, dans lesquels ledit copolymère est un copolymère de butadiène/isoprène/styrène, la teneur des motifs structuraux issus de styrène étant de 10 à 50 % en poids, de préférence de 15 à 35 % en poids, et de façon correspondante, la teneur des motifs structuraux issus de butadiène et d'isoprène étant de 50 à 90 % en poids, de préférence de 65 à 85 % en poids, et le rapport pondéral des motifs structuraux issus de butadiène à ceux issus d'isoprène étant de 10:90 à 90:10, de préférence de 30:70 à 70:30.

6. Matériaux nanocomposites de copolymère/argile selon la revendication 1, dans lesquels ledit copolymère est un copolymère de butadiène/isoprène, la teneur des motifs structuraux issus d'isoprène étant de 10 à 90 % en poids, de préférence de 30 à 70 % en poids, et de façon correspondante, la teneur des motifs structuraux issus de butadiène étant de 10 à 90 % en poids, de préférence de 30 à 70 % en poids.

7. Matériaux nanocomposites de copolymère/argile selon l'une quelconque des revendications 1 à 6, dans lesquels la teneur du minéral argileux va de 1 à 30 parties en poids pour 100 parties en poids dudit copolymère.

8. Matériaux nanocomposites de copolymère/argile selon la revendication 7, dans lesquels la teneur du minéral argileux va de 1 à 15 parties en poids pour 100 parties en poids dudit copolymère.

9. Procédé pour la préparation des matériaux nanocomposites de copolymère/argile selon l'une quelconque des revendications 1 à 8, comprenant le chargement dans un réacteur d'un solvant hydrocarbure organique, d'au moins deux monomères choisis dans le groupe constitué par le butadiène, l'isoprène et le styrène, d'additifs polaires éventuels et d'un minéral argileux organique dispersés dans un milieu de dispersion ; l'agitation de façon homogène pour former une dispersion stable de monomères/argile organique ; puis l'élévation de la température du système réactionnel à 30 à 80 °C ; l'amorce de la réaction de polymérisation par ajout d'un initiateur organolithien ; après la polymérisation totale de tous les monomères, l'arrêt de la réaction et éventuellement l'ajout d'un additif classique ; le traitement conclusif de la solution de polymère résultante d'une manière classique et ensuite le séchage.

10. Procédé selon la revendication 9, dans lequel ledit minéral argileux est de l'aluminosilicate lamellaire ayant une teneur en montmorillonite d'au moins 85 % en poids, une taille des particules allant de 1 x 10³ à 70 x 10³ nm et une capacité d'échange de cations de 40 à 200 mEq/100 g.

11. Procédé selon la revendication 10, dans lequel ledit minéral argileux est de l'aluminosilicate lamellaire ayant une teneur en montmorillonite d'au moins 95 % en poids, une taille des particules allant de 20 x 10³ à 30 x 10³ nm et une capacité d'échange de cations de 90 à 110 mEq/100 g.

12. Procédé selon l'une quelconque des revendications 9 à 11, dans lequel ledit solvant hydrocarbure organique est choisi dans le groupe constitué par le benzène, le toluène, l'éthylbenzène, le xylène, le pentane, l'hexane, l'heptane, l'octane, le cyclohexane, les xylènes mélangés et le pétrole raffiné, de préférence le toluène, le xylène, l'hexane, le cyclohexane et le pétrole raffiné.

13. Procédé selon l'une quelconque des revendications 9 à 11, dans lequel ledit additif polaire est constitué de composés contenant de l'oxygène choisis dans le groupe constitué par l'oxyde de diéthyle, le tétrahydrofurane, les éthers couronnes et les composés représentés par les formules R₁OCH₂CH₂OR₂ et R₁OCH₂CH₂OCH₂CH₂OR₂, dans lesquelles R₁ et R₂ peuvent être identiques ou différents et représentent des groupes alkyle ayant 1 à 6 atomes de carbone.

14. Procédé selon l'une quelconque des revendications 9 à 11, dans lequel ledit additif polaire est constitué de composés contenant de l'azote choisis dans le groupe constitué par la triéthylamine, la tétraméthyléthylènediamine et le dipipéridinoéthane.

15. Procédé selon l'une quelconque des revendications 9 à 11, dans lequel ledit additif polaire est un composé contenant du phosphore qui est l'hexaméthylphosphoramide.

16. Procédé selon l'une quelconque des revendications 9 à 11, dans lequel ledit initiateur organolithien est un initiateur organolithien monofonctionnel représenté par RLi, où R est un groupe alkyle ou aryle ayant de 1 à 20 atomes de carbone.

17. Procédé selon la revendication 16, dans lequel ledit initiateur organolithien monofonctionnel est choisi dans le groupe constitué par le méthyllithium, l'éthyllithium, l'isopropyllithium, le *n*-butyllithium, le *sec-*butyllithium, le *tert*-butyllithium, le *tert*-octyllithium, le phényllithium, le 2-napthyllithium, le 4-butylphényllithium, le 4-phénylbutyllithium ou le cyclohexyllithium.

18. Procédé selon l'une quelconque des revendications 9 à 11, dans lequel ledit milieu de dispersion est choisi dans le groupe constitué par le benzène, le toluène, l'éthylbenzène, le xylène, les composés aromatiques mélangés, l'oxyde de diéthyle, la triéthylamine, l'hexaméthylphosphoramide ou les mélanges de ceux-ci, de préférence le toluène, le xylène ou un mélange de ceux-ci.
